# EUROPÄISCHE PATENTANMELDUNG

(11) **EP 0 683 360 A1**
(43) Veröffentlichungstag der Anmeldung: **22.11.1995**
(21) Anmeldenummer: 95107443.4
(22) Anmeldetag: 17.05.1995
(51) Int. Cl.: F24F 3/16, B01D 46/10, B01D 46/42, B01D 50/00

(54) **Vorrichtung zum Filtern von Schwebstoffen**

(30) Priorität: 19.05.1994 DE 4417443
(71) Anmelder: DÖLCO-Exquisit, Inh. Alfred Dörle, D-79112 Freiburg (DE)
(72) Erfinder: Dörle, Alfred, D-79112 Freiburg (DE)
(74) Vertreter: Schmitt, Hans, Dipl.-Ing.

(57) **Zusammenfassung**

Eine Vorrichtung (1) zum Filtern von Schwebstoffen oder dergleichen Feststoffpartikeln aus Luft, insbesondere aus Abluft, weist einen von einem Luftstrom durchströmten Luftfilter (2) auf. Der Luftfilter (2) ist drehbar gelagert und läuft jeweils mit seinem unteren Teilbereich in einem Flüssigkeitsbad (4) mit Reinigungsflüssigkeit um. Oberhalb dieses Teilbereiches ist der Luftfilter (2) zumindest bereichsweise von dem Luftstrom durchströmt.
Dadurch wird einerseits die Filterwirkung des Luftfilters (2) verbessert und andererseits können die Reinigungs- oder Wartungsintervalle für den Luftfilter (2) erheblich verlängert werden. Die Vorrichtung (1) eignet sich besonders zum Filtern von Mineralfasern, wie beispielsweise Stein- oder Glaswollfasern.

## Beschreibung

Die Erfindung bezieht sich auf eine Vorrichtung zum Filtern von Schwebstoffen oder dergleichen Feststoffpartikeln aus Luft, insbesondere aus Abluft, mit einem von einem Luftstrom durchströmten Luftfilter.

Solche Filtervorrichtungen sind seit langem bekannt und werden beispielsweise bei Klimaanlagen dazu verwendet, um Staubpartikel aus der von der Klimaanlage umgewälzten Raumluft herauszufiltern. Ungünstig ist dabei jedoch, daß sich der aus der Luft herausgefilterte Staub in dem Filter ansammelt, was einerseits zum Verstopfen des Filters führt und andererseits die Filterwirkung verringert, da der Staub mit zunehmender Betriebsdauer des Filters immer tiefer in den Filter eindringt. Dies ist besonders dann nachteilig, wenn die zu filternde Luft Mineralfaserpartikel enthält, wie sie beispielsweise bei Reparaturarbeiten an mit Glas- oder Steinwolle isolierten Dächern oder Wänden freigesetzt werden können. Solche Mineralfasern weisen eine längliche, nadelartige Form auf und bewirken deshalb ein besonders schnelles Verstopfen des Filters. Mit ihrer nadelartigen Spitze können sie außerdem die Porenwand der Filterporen durchdringen und dadurch tief in das Filtermaterial eindringen, wodurch die Filterwirkung zusätzlich verringert wird.

Gerade bei mineralfaserbelasteter Luft ist jedoch ein störungsfreies Arbeiten der Filtervorrichtung besonders wichtig, da die Mineralfasern, bedingt durch ihre nadelartige spitze Form beim Einatmen in das Lungen- oder Brustfellgewebe eindringen und sich dort festhaken können. Sie stehen deshalb im Verdacht, krebserregend zu sein.

Besonders wichtig ist eine leistungsfähige Filtervorrichtung vor allem dann, wenn Mineralfasern in erhöhter Konzentration freigesetzt werden, wie dies beispielsweise beim Trockenlegen von unter einem Estrich verlegten Glas- oder Steinwoll-Isolationsschichten der Fall ist, die nach dem Zutritt von Wasser feucht geworden sind. Dabei wird die in dem Isolationsmaterial gespeicherte Feuchtigkeit dadurch entfernt, daß an verschiedenen Stellen der Isolationsschicht mit einer geeigneten Vorrichtung Trockenluft eingeströmt und abgesaugt wird. Die in dem Isolationsmaterial gespeicherte Feuchtigkeit wird dabei zusammen mit der Luft nach außen abgeführt. Die dadurch entstehende Abluft weist eine erhöhte Mineralfaserkonzentration auf, die bei einer Filtervorrichtung der eingangs genannten Art zu einem vorzeitigen Verstopfen des Filters führt.

Es besteht deshalb insbesondere die Aufgabe, eine Vorrichtung der eingangs genannten Art zu schaffen, die eine längere Betriebsdauer des Luftfilters ermöglicht.

Die Lösung dieser Aufgabe besteht darin, daß der Luftfilter jeweils mit seinem unteren Teilbereich in einem Flüssigkeitsbad mit Reinigungsflüssigkeit umläuft und daß der Luftfilter oberhalb dieses Teilbereiches zumindest bereichsweise von dem Luftstrom durchströmt ist.

In vorteilhafter Weise können dadurch an dem Filter angelagerte Feststoffpartikel mit der Reinigungsflüssigkeit abgespült werden, so daß der Luftfilter ständig gereinigt wird und eine entsprechend hohe Lebensdauer aufweist. Die an die Reinigungsflüssigkeit abgegebenen Feststoffpartikel können sich dann in dem Flüssigkeitsbad als Schlamm absetzen, so daß die Reinigungsflüssigkeit auch nach längerer Betriebsdauer noch eine ausreichende Reinigungswirkung aufweist. Die Vorrichtung eignet sich besonders zum Reinigen von Luft, die Mineralfasern, beispielsweise Glas- und/oder Steinwollfasern enthält.

Besonders vorteilhaft ist, wenn die Reinigungsflüssigkeit Wasser ist. Eventuell verdunstende Reinigungsflüssigkeit kann dann überall leicht nachgefüllt werden. Außerdem kann die Reinigungsflüssigkeit zum Transport der Vorrichtung problemlos abgelassen und nach dem Transport durch eine entsprechende Menge Frischwasser ersetzt werden.

Eine Weiterbildung der Erfindung sieht vor, daß zum Erzeugen des Luftstromes ein Gebläse oder dergleichen Verdränger vorgesehen ist und daß das Gebläse vorzugsweise integrales Bestandteil der Vorrichtung ist. Die Filtervorrichtung und das Gebläse können dann beispielsweise in einem gemeinsamen Gehäuse untergebracht werden, so daß die gesamte Vorrichtung besonders gut handhabbar ist. Die Vorrichtung kann dann sowohl als Raumluftfilter verwendet werden, beispielsweise um bei Reparaturarbeiten an mit Glas- oder Steinwolle isolierten Dachräumen Glas- oder Steinwollfasern aus der Luft zu filtern, oder sie kann als Absaugeinrichtung Verwendung finden, beispielsweise zum Entfeuchten einer hinter einer Deck-, Wand- oder Bodenschicht angeordneten Isolationsschicht, wobei die abgesaugte Abluft direkt durch den Luftfilter geführt wird, so daß eventuell darin enthaltene Faser- oder Feststoffpartikel erst gar nicht in die Umgebungsluft gelangen können.

Zweckmäßigerweise ist vorgesehen, daß dem Luftfilter ein Grobfilter vorgeschaltet ist. Die Standzeit des Luftfilters kann dadurch zusätzlich verlängert werden, was besonders auf Baustellen, wo mit außergewöhnlichen Staubbelastungen zu rechnen ist, vorteilhaft ist. Der Grobfilter ist zweckmäßigerweise außenseitig an der Vorrichtung vorgesehen, so daß er leicht zugänglich ist und bei Bedarf problemlos ausgetauscht oder gereinigt werden kann.

Besonders vorteilhaft ist, wenn die Vorrichtung eine Flüssigkeitswanne für die Reinigungsflüssigkeit aufweist, die einen Flüssigkeitszulauf mit einem Absperrventil, insbesondere einem Magnetventil, hat und wenn das Absperrventil zum Regeln des Füllstandes der Reinigungsflüssigkeit mit einem Füllstandsensor gekoppelt ist. Beim Betrieb der Vorrichtung eventuell verdunstende Reinigungsflüssigkeit wird dann automatisch nachgefüllt, so daß auch nach längerer Betriebszeit der gesamte Filterbereich des Luftfilters vom Reinigungsvorgang erfaßt wird.
Außerdem ist durch die Füllstandsregelung das Neubefüllen des Flüssigkeitsbades, beispielsweise nach einem Transport der Vorrichtung, erleichtert, da das Flüssigkeitsbad auf einfache Weise, beispielsweise mit einem an einer Wasserleitung angeschlossenen Wasserschlauch, gefüllt werden kann, wobei das Magnetventil beim Erreichen des gewünschten Flüssigkeitspegels die Wasserzufuhr automatisch abschaltet und dadurch ein Überlaufen des Flüssigkeitsbades verhindert. Selbstverständlich kann statt des Magnetventiles auch ein mechanisches Absperrventil vorgesehen sein, das beispielsweise durch einen Schwimmmer gesteuert ist.

Besonders günstig ist, wenn die Flüssigkeitswanne einen Flüssigkeitsablauf mit einem Absperrventil, insbesondere einem Magnetventil, aufweist und wenn das Absperrventil zum intervalgesteuerten Ablassen der Reinigungsflüssigkeit und gegebenenfalls zum anschließenden Spülen der Flüssigkeitswanne mit einem Zeitglied gekoppelt ist. Das Absperrventil des Flüssigkeitsablaufs wird dann, gesteuert durch das Zeitglied, in regelmäßigen Zeitabständen zum Ablassen der in dem Flüssigkeitsbad befindlichen Reinigungsflüssigkeit geöffnet, so daß sich das Flüssigkeitsbad mit den darin befindlichen, aus der Luft gefilterten Feststoffpartikeln, vollständig entleert. Anschließend wird der Flüssigkeitszulauf geöffnet, wobei der Flüssigkeitsablauf von dem Zeitglied noch für eine bestimmte Zeit offen gehalten wird, damit Filterschlamm-Reste, die sich eventuell am Boden der Flüssigkeitswanne abgesetzt haben, durch Spülen der Flüssigkeitswanne entfernt werden können. Nach Abschluß des Spülvorganges wird dann das Flüssigkeitsbad wieder bis zu dem vorgesehenen Flüssigkeitsspiegel mit sauberer Reinigungsflüssigkeit aufgefüllt. Das Flüssigkeitsbad wird also in bestimmten Zeitabständen automatisch erneuert, damit der Luftfilter noch besser gereinigt wird und entsprechend lange in der Vorrichtung verbleiben kann.

Eine vorteilhafte Ausgestaltung der Erfindung sieht vor, daß dem Luftfilter zum Abscheiden von durch den Luftstrom mitgerissener Reinigungsflüssigkeit ein Flüssigkeitsabscheider nachgeschaltet ist. Hierzu kann beispielsweise ein in den Luftstrom ragendes Luft-Umlenkblech vorgesehen sein, an dem eventuell von der Luft mitgerissene Reinigungsflüssigkeit ablaufen kann.

Besonders zweckmäßig ist, wenn der Flüssigkeitsabscheider eine in den Luftstrom ragende Auffangwanne für die abzuscheidende Flüssigkeit aufweist. In diesem Fall ist in Luft-Strömungsrichtung hinter Flüssigkeitswanne eine weitere, vorzugsweise mit einem Ablauf versehene Wanne vorgesehen, mit der von dem Luftstrom erfaßte Reinigungsflüssigkeit aufgefangen und abgeleitet werden kann.

Die Vorrichtung kann außerdem lufteinlaßseitig zumindest eine Kupplung, vorzugsweise mehrere Kupplungen zum Anschließen von Luftschläuchen aufweisen. Hierzu können an der Vorrichtung entsprechende Stutzen vorgesehen sein, auf die jeweils ein Luft-Absaugschlauch aufgesteckt werden kann. Durch den beim Absaugen erzeugten Unterdruck werden die Luftschläuche besonders gut auf den Stutzen gehalten. Eine solche Vorrichtung eignet sich besonders zum Trockenlegen von feucht gewordenen Isolationsschichten, die beispielsweise unter einem Estrich oder unter einer Dachschicht verlegt sein können. In die Dachschicht oder den Estrich können dann an verschiedenen Stellen Bohrungen zum Einschrauben von Absaugstutzen eingebracht werden, die zum Absaugen der in der Isolationsschicht gespeicherten Feuchtluft mittels Schläuchen mit den lufteinlaßseitigen Anschluß-Kupplungen der Filtervorrichtung verbunden werden können.

Das Filterelement des Luftfilters kann aus einem offenporigen oder gemischtporigen Schaumstoff hergestellt sein. Besonders vorteilhaft sind Filterelemente, die in Luft-Strömungsrichtung orientierte Längsporen aufweisen und bei denen die Querschnitte dieser Längsporen in unterschiedlichen, quer zur Luft-Strömungsrichtung verlaufenden Ebenen zueinander versetzt sind. Feststoffpartikel, insbesondere Mineralfasern, können dann nicht so leicht in das Filtermaterial eindringen.
Besonders kostengünstig kann das Filterelement aus PU-Schaum hergestellt werden.

Nachstehend sind Ausführungsbeispiele der Erfindung mit ihren wesentlichen Einzelheiten anhand der Zeichnung näher erläutert.

Es zeigen in unterschiedlichen Maßstäben und zum Teil stärker schematisiert:

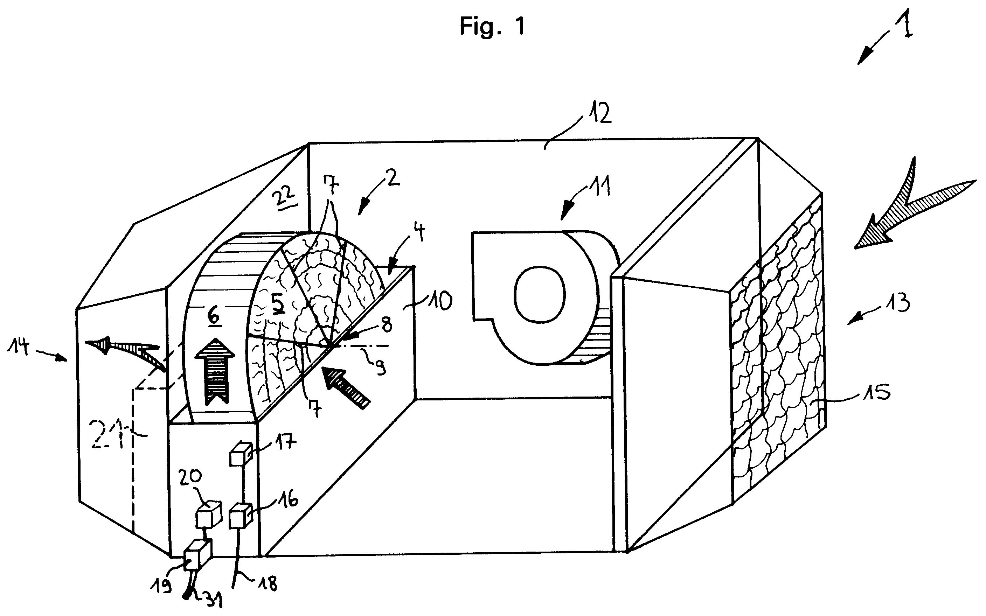

- Fig. 1: eine perspektivische Ansicht einer Vorrichtung zum Filtern von Feststoffpartikel aus Luft, mit einem drehbar gelagerten Luftfilter, der in einer Reinigungsflüssigkeit umläuft und
- Fig. 2: eine perspektivische Ansicht einer Vorrichtung ähnlich der in Figur 1, bei der zum Trockenlegen einer unter einem Estrich befindlichen Isolationsschicht verschiedene Absaugeinrichtungen zum Absaugen der in der Isolationsschicht gespeicherten Feuchtluft angeschlossen sind.

Eine im Ganzen mit 1 bezeichnete Vorrichtung zum Filtern von Schwebstoffen oder dergleichen Feststoffpartikeln aus Luft weist einen drehbar gelagerten Luftfilter 2 auf, der in seinem oberen Teilbereich von einem Luftstrom durchströmt ist und mit seinem unteren Teilbereich in einem Flüssigkeitsbad 4 mit Reinigungsflüssigkeit umläuft. Die aus der Luft herausgefilterten Schmutz- oder Feststoffpartikel, die an dem Luftfilter 2 anhaften, werden beim Durchlaufen des Flüssigkeitsbades 4 abgespült und an die Reinigungsflüssigkeit abgegeben. Die Standzeit des Luftfilters 2 kann dadurch erheblich verlängert werden, so daß die Vorrichtung 1 auch bei stark mit Feststoffpartikeln belasteter Luft über einen längeren Zeitraum einen praktisch wartungsfreien Betrieb ermöglicht.

Der Luftfilter 2 hat die Form einer kreiszylindrischen Scheibe und enthält in seinem Inneren ein offenporiges oder gemischtporiges Filtermaterial 5, das von einem umfangsseitig umlaufenden, zylindrischen Metallring 6 zusammengehalten wird. Der Metallring 6 ist an den Flachseiten des Luftfilters 2 jeweils mit mehreren, radial nach innen verlaufenden Haltespeichen oder dergleichen Halteteilen 7 an dem Drehlager 8 des Luftfilters 2 abgestützt. Dabei liegt die Achse des Drehlagers 8 auf der Längsmittelachse 9 des Luftfilters 2. Der Luftfilter 2 greift mit seiner unteren Hälfte in eine quaderförmige Flüssigkeitswanne 10 ein, welche die Reinigungsflüssigkeit enthält.

In die Vorrichtung 1 ist ferner ein Gebläse 11 integriert, das einen Luftstrom erzeugt, der die obere Hälfte des Luftfilters 2 durchdringt. Die Vorrichtung 1 ist dadurch besonders gut handhabbar und kann beispielsweise auf einer Baustelle als Raumluftfilter eingesetzt werden, ohne daß das Anschließen eines externen Gebläses oder eines externen Luft-Verdrängers erforderlich ist.

Der Luftfilter 2 kann auf der Zuström- oder - wie hier - auf der Abströmseite des Gebläses angeordnet sein. Der drehangetriebene Luftfilter 2 kann dabei beispielsweise mittels umfangsseitig angeordneter und vom Luftstrom beaufschlagter Luftschaufeln im Wasserbad rotieren, möglich ist aber auch, daß der Luftfilter 2 dazu mit einem Antriebsmotor in Antriebsverbindung steht.

Der Luftfilter 2, die Flüssigkeitswanne 10 und das Gebläse 11 sind in einem gemeinsamen Vorrichtungsgehäuse 12 mit rechteckigem Querschnitt angeordnet. Das Vorrichtungsgehäuse 12 weist an seinem einen stirnseitigen Ende eine Lufteinlaßöffnung 13 für die von dem Gebläse 11 angesaugte Luft auf und hat an dem gegenüberliegenden stirnseitigen Ende ein Luftaustrittsöffnung 14 für die von dem Luftfilter 2 gereinigte Luft. Zum Entfernen von groben Schmutzpartikeln ist bei der Lufteinlaßöffnung 13 ein Grobfilter 15 vorgesehen. Die dem Luftfilter 2 zugeführte Luft ist dadurch bereits vorgereinigt, was die Standzeit des Luftfilters 2 zusätzlich verbessert. Der Grobfilter 15 ist gut zugänglich an der Außenseite des Vorrichtugsgehäuses 12 angebracht und kann dadurch bei Bedarf leicht gereinigt oder erneuert werden.

Die Flüssigkeitswanne 10 hat einen Flüssigkeitszulauf mit einem Magnet-Absperrventil 16, das zum Regeln des Füllstandes der Reinigungsflüssigkeit mit einem Füllstandssensor 17 gekoppelt ist. Wenn der Flüssigkeitspegel der Reinigungsflüssigkeit nach längerer Betriebszeit der Vorrichtung 1, beispielsweise durch Verdunsten von Reinigungsflüssigkeit, abfallen sollte, wird das Magnet-Absperrventil 16 des Flüssigkeitszulaufes von dem Füllstandssensor 17 automatisch geöffnet, bis der Flüssigkeitspegel wieder das vorgesehene Sollniveau erreicht hat. Ein Trockenlaufen des Filters wird dadurch verhindert. Besonders vorteilhaft ist, wenn als Reinigungsflüssigkeit Wasser verwendet wird. Das Magnetventil 16 kann dann mit einem Wasserschlauch 18 direkt an einer Wasserleitung angeschlossen werden.
In vorteilhafter Weise wird durch den Füllstandssensor 17 und das Magnet-Absperrventil 16 auch das Neubefüllen der Flüssigkeitswanne 10 erleichtert, wenn diese beispielsweise zum Transport der Vorrichtung 1 entleert wurde. Der Wasserschlauch 18 braucht dann zum Füllen der Flüssigkeitswanne 10 nur mit einer Wasserleitung verbunden zu werden, wobei der Füllstandssensor 17 bei Erreichen des gewünschten Flüssigkeitspegels die Wasserzufuhr mit dem Magnet-Absperrventil 16 automatisch abschaltet.

Die Flüssigkeitswanne 10 weist außerdem einen Flüssigkeitsablauf 31 mit einem Magnet-Absperrventil 19 auf, das zum intervallgesteuerten Ablaufen der Reinigungsflüssigkeit und zum anschließenden Spülen der Flüssigkeitswanne 10 mit einem Zeitglied 20 gekoppelt ist. Die Reinigungsflüssigkeit kann dadurch, wenn sie nach längerer Betriebszeit des Luftfilters 2 stärker verschmutzt ist, automatisch erneuert werden. Dazu öffnet das Zeitglied 20 zunächst das Magnet-Absperrventil 19, damit die in der Flüssigkeitswanne 10 enthaltene Reinigungsflüssigkeit ablaufen kann. Nach Entleeren der Flüssigkeitswanne 10 wird dann zunächst das Magnet-Absperrventil 19 noch eine bestimmte Zeit offen gehalten, wobei gleichzeitig, gesteuert durch den Füllstandsensor 17, der Wasserzulauf geöffnet wird, um eventuell in der Flüssigkeitswanne 10 enthaltene Filterschlammreste wegzuspülen. Anschließend wird das Magnet-Absperrventil 19 des Wasserablaufes geschlossen, damit die Flüssigkeitswanne 10 mit frischem Wasser gefüllt werden kann.

Zum Abscheiden von durch den Luftstrom mitgerissener Reinigungsflüssigkeit ist der Flüssigkeitswanne 10 an der Luftausgangsseite des Luftfilters 2 eine Auffangwanne 21 nachgeschaltet. Die Oberkante der Auffangwanne 21 ist höher angeordnet als die der Flüssigkeitswanne 10, so daß die Auffangwanne 21 in den aus dem Luftfilter 2 austretenden Luftstrom ragt. Eventuell von dem Luftstrom mitgerissene Reinigungsflüssigkeit kann dadurch in der Auffangwanne 21 gesammelt und beispielsweise über einen in der Auffangwanne 21 vorgesehenen Ablauf kontrolliert abgeführt werden. Ein Austreten von Reinigungsflüssigkeit an der Luftaustrittsöffnung 14 der Vorrichtung 1 wird dadurch vermieden.

Zwischen der Flüssigkeitswanne 10 und der Auffangwanne 21 ist eine Trennwand 22 vorgesehen, die oberhalb der Flüssigkeitswanne 10 eine kreisabschnittsförmige, an den Luftdurchtrittsbereich des Luftfilters 2 angepaßte Öffnung aufweist, die von dem Luftfilter 2 verdeckt wird. Die Trennwand 22 verhindert, daß ungefilterte Luft seitlich an dem Luftfilter 2 vorbeiströmen und zur Luftaustrittsöffnung 14 gelangen kann.

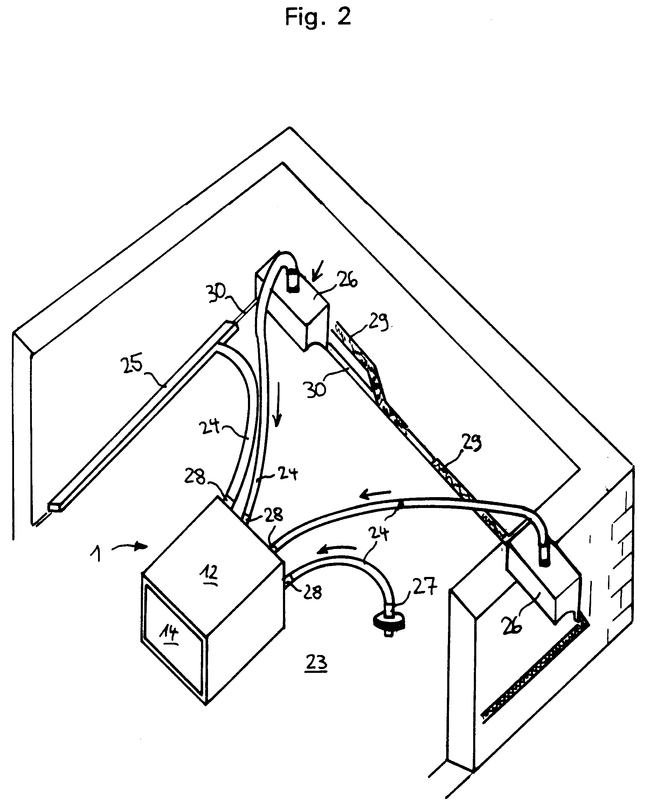

Figur 2 zeigt, wie die erfindungsgemäße Vorrichtung zum Trocknen einer unter einem Estrich 23 befindlichen Glaswollisolationsschicht, die nach dem Zutritt von Wasser feucht geworden ist, verwendet werden kann. An der Filter-Vorrichtung 1 sind mehrere Luftabsaugschläuche 24 angeschlossen, die jeweils mit einem Luftabsaugkanal 25, einem Schlitzdüsenstutzen 26 oder mit einem Einschraubstutzen 27 verbunden sind. Die Filter-Vorrichtung 1 weist hierzu lufteinlaßseitig mehrere Anschluß-Kupplungen 28 auf, mit denen die Luftabsaugschläuche 24 auf einfache Weise mit der Filter-Vorrichtung 1 verbunden werden können. Hierdurch kann an mehreren Stellen gleichzeitig Luft aus der feucht gewordenen Isolationsschicht abgesaugt werden, so daß diese wirkungsvoll getrocknet werden kann. Wie in Figur 2 gut zu erkennen ist, kann die in der Isolationsschicht gespeicherte Feuchtluft beispielsweise mit einem Luftabsaugkanal 25 oder mit Schlitzdüsenstutzen 26 nach Entfernen des Fugendichtbandes 29 an einer Dehnfuge 30 abgesaugt werden. Besonders vorteilhaft hat sich die Verwendung eines Einschraubstutzens 27 erwiesen, der praktisch an beliebiger Stelle, nach Einbringen einer entsprechenden Öffnung, beispielsweise einer Bohrung, in den Estrich 23 eingesetzt werden kann.
Die aus der Glaswoll-Isolationsschicht abgesaugte Feuchtluft wird in der Vorrichtung 1 unmittelbar dem Luftfilter 2 zugeführt, der die in der Absaugluft enthaltenen Glas- oder Mineralfasern herausfiltert, so daß ein Freisetzen von gesundheitsgefährdenden Mineralfasern weitestgehend vermieden wird. Da der in der Reinigungsflüssigkeit umlaufende Luftfilter 2 ständig regeneriert wird, ermöglicht die Vorrichtung 1 auch nach längerer Betriebsdauer eine wirkungsvolle Filterung der Absaugluft.
Zweckmäßig kann es sein, wenn die Vorrichtung 1 eine Zufuhreinrichtung zur Zufuhr eines Desinfektionsmittels, eines Fungizids oder dgl. Zusatzmittels in die Reinigungsflüssigkeit aufweist. Diese - hier allerdings nicht dargestellte - Zufuhreinrichtung kann vorzugsweise als Injektor ausgebildet sein, der mit einem Zusatzmittel-Vorrat in Verbindung steht und der zumindest eine Injektionsdüse aufweist, die in den Flüssigkeitszulauf oder die Zulaufleitung zwischengeschaltet ist. Somit kann der Flüssigkeitsstrom im Flüssigkeitszulauf auch das Zusatzmittel aus der Injektordüse mitreissen, ohne daß zusätzlich eine Pumpe oder dgl. erforderlich wäre. Mit Hilfe der Zufuhreinrichtung können in die Flüssigkeitswanne 10 und die darin enthaltene Reinigungsflüssigkeit durch Zusatzmittel eingeleitet werden, die beispielweise einem Pilzbefall des Luftfilters entgegen wirken.

## Patentansprüche

1. Vorrichtung zum Filtern von Schwebstoffen oder dergleichen Feststoffpartikeln aus Luft, insbesondere aus Abluft, mit einem von einem Luftstrom durchströmten Luftfilter (2), **dadurch gekennzeichnet**, daß der Luftfilter (2) drehbar gelagert ist, daß der Luftfilter (2) jeweils mit seinem unteren Teilbereich in einem Flüssigkeitsbad (4) mit Reinigungsflüssigkeit umläuft und daß der Luftfilter (2) oberhalb dieses Teilbereiches zumindest bereichsweise von dem Luftstrom durchströmt ist.

2. Vorrichtung nach Anspruch 1, dadurch gekennzeichnet, daß die Reinigungsflüssigkeit Wasser ist.

3. Vorrichtung nach Anspruch 1 oder 2, dadurch gekennzeichnet, daß zum Erzeugen des Luftstromes ein Gebläse (11) oder dergleichen Verdränger vorgesehen ist und daß das Gebläse (11) vorzugsweise integrales Bestandteil der Vorrichtung (1) ist.

4. Vorrichtung nach einem der Ansprüche 1 bis 3, dadurch gekennzeichnet, daß dem Luftfilter ein Grobfilter (15) vorgeschaltet ist.

5. Vorrichtung nach einem der Ansprüche 1 bis 4, dadurch gekennzeichnet, daß die Vorrichtung (1) eine Flüssigkeitswanne (10) für die Reinigungsflüssigkeit aufweist, die einen Flüssigkeitszulauf mit einem Absperrventil (16), insbesondere einem Magnetventil, hat und daß das Absperrventil (16) zum Regeln des Füllstandes der Reinigungsflüssigkeit mit einem Füllstandssensor (17) gekoppelt ist.

6. Vorrichtung nach einem der Ansprüche 1 bis 5, dadurch gekennzeichnet, daß die Flüssigkeitswanne (10) einen Flüssigkeitsablauf mit einem Absperrventil (19), insbesondere einem Magnetventil, aufweist und daß das Absperrventil (19) zum intervallgesteuerten Ablassen der Reinigungsflüssigkeit und gegebenenfalls zum anschließenden Spülen der Flüssigkeitswanne (10) mit einem Zeitglied (20) gekoppelt ist.

7. Vorrichtung nach einem der Ansprüche 1 bis 6, dadurch gekennzeichnet, daß dem Luftfilter (2) zum Abscheiden von durch den Luftstrom mitgerissener Reinigungsflüssigkeit ein Flüssigkeitsabscheider nachgeschaltet ist.

8. Vorrichtung nach einem der Ansprüche 1 bis 7, dadurch gekennzeichnet, daß diese eine in den Luftstrom ragende Auffangwanne (21) für die abzuscheidende Flüssigkeit aufweist.

9. Vorrichtung nach einem der Ansprüche 1 bis 8, dadurch gekennzeichnet, daß die Vorrichtung (1) lufteinlaßseitig mindestens eine Kupplung (28), vorzugsweise mehrere Kupplungen (28) zum Anschließen von Luftschläuchen (24) aufweist.

10. Vorrichtung nach einem der Ansprüche 1 bis 9, dadurch gekennzeichnet, daß das Filterelement des Luftfilters (2) aus einem offenporigen oder gemischtporigen Schaumstoff, insbesondere aus Polyurethan-Schaumstoff, hergestellt ist.
